# EUROPÄISCHE PATENTSCHRIFT

(11) **EP 4 144 613 B1**
(45) Veröffentlichungstag und Bekanntmachung des Hinweises auf die Patenterteilung: **01.04.2026**
(21) Anmeldenummer: 21194513.4
(22) Anmeldetag: 02.09.2021
(51) Int. Cl.: B61L 15/00, G01B 3/11

(54) **TRACKINGSYSTEM ZUM ERMITTELN VON RELATIVBEWEGUNGEN ZWISCHEN ZWEI FAHRZEUGTEILEN UND VERFAHREN**
TRACKING SYSTEM FOR DETERMINING RELATIVE MOTION BETWEEN TWO VEHICLE PARTS AND METHODS
SYSTÈME DE SUIVI PERMETTANT DE DÉTERMINER LES MOUVEMENTS RELATIFS ENTRE DEUX PIÈCES DE VÉHICULE ET PROCÉDÉES

(43) Veröffentlichungstag der Anmeldung: 08.03.2023
(73) Patentinhaber: Hübner GmbH & Co. KG, 34123 Kassel (DE)
(72) Erfinder: Riehn, Marcus, 37520 Osterode (DE); Harz, Sebastian, 34320 Söhrewald (DE); Illig, Heiko, 34270 Schauenburg (DE); Franz, Frederik, 34121 Kassel (DE); Moritzen, Maximilian, 34119 Kassel (DE)

(56) Entgegenhaltungen:
- EP-A1- 3 061 665
- EP-B1- 2 184 580

## Beschreibung

Die Erfindung betrifft die Verwendung eines Trackingsystems mit zwei Trackingmodulen zum Ermitteln von Relativbewegungen zwischen zwei beweglich miteinander verbundenen Fahrzeugteilen eines Fahrzeugverbunds. Ferner betrifft die Erfindung ein Verfahren zum Ermitteln von Relativbewegungen zwischen zwei beweglich miteinander verbundenen Fahrzeugteilen eines Fahrzeugverbunds sowie einen Fahrzeugverbund mit zwei beweglich miteinander verbundenen Fahrzeugteilen.

### STAND DER TECHNIK

Insbesondere im Bereich des öffentlichen Personenverkehrs werden Fahrzeuge eingesetzt, die mehrere Fahrzeugteile aufweisen, um so möglichst viele Personen befördern zu können. Es handelt sich dabei um einen Fahrzeugverbund aus mehreren Fahrzeugteilen, wobei die Fahrzeugteile beweglich miteinander verbunden sind, so dass der Fahrzeugverbund ausreichend beweglich und wendig ist. Es kann sich bei einem solchen Fahrzeugverbund z. B. um ein Schienenfahrzeug, wie eine Vollbahn, Metro oder Straßenbahn, oder um einen Bus mit zwei oder mehr beweglich miteinander verbundenen Fahrzeugteilen handeln. Die bewegliche Verbindung wird dabei üblicherweise durch eine gelenkige Verbindung oder durch eine Kupplung zwischen den Fahrzeugteilen erreicht.

Für den Betrieb z. B. eines Gelenkbusses mit zwei gelenkig miteinander verbundenen Fahrzeugteilen kann es erforderlich sein, den sogenannten Knickwinkel laufend zu erfassen, d. h. den Winkel zwischen den beiden Längsachsen der Fahrzeugteile. Konkret kann in Abhängigkeit von dem aktuellen Knickwinkel ein Gelenk, das die beiden Fahrzeugteile miteinander verbindet, gesteuert werden, z. B. um eine Gelenkdämpfung bedarfsabhängig einzustellen.

Auch aus dem Bereich der Schienenfahrzeuge ist der Einsatz von Sensoren bekannt, um den Winkel zwischen den Längsachsen der Fahrzeugteile zu ermitteln. Ein derartiges System wird z. B. in den Dokumenten DE 10 2012 202 838 A1 und EP 3 061 665 A1 beschrieben. Die EP 2 184 580 B1 zeigt eine Vorrichtung zum Ermitteln des Anlaufwinkels von Rädern eines Schienenfahrzeugs in Bezug auf die Schiene.

### OFFENBARUNG DER ERFINDUNG

Aufgabe der Erfindung ist es, ein alternatives und insbesondere optimiertes System vorzuschlagen, das es ermöglicht, im laufenden Betrieb Relativbewegungen zwischen Fahrzeugteilen eines Fahrzeugverbunds ermitteln zu können.

Die erfindungsgemäße Aufgabe wird gelöst durch die Verwendung eines Trackingsystems gemäß den Merkmalen des unabhängigen Anspruchs 1. Ferner wird die erfindungsgemäße Aufgabe gelöst durch ein Verfahren mit den Merkmalen des unabhängigen Anspruchs 11 sowie durch einen Fahrzeugverbund mit den Merkmalen des unabhängigen Anspruchs 15.

Im Betrieb zwischen zwei beweglich verbundenen Fahrzeugteilen eines Fahrzeugverbunds liegen bis zu sechs Bewegungsfreiheitsgrade vor, wobei für eine vollständige Beschreibung der Relativbewegungen der beiden Fahrzeugteile die Bewegungen in Bezug auf alle diese sechs Bewegungsfreiheitsgrade bekannt sein müssen. Erfindungsgemäß wird zumindest eine der folgenden Relativbewegungen des ersten Fahrzeugteils gegenüber dem zweiten Fahrzeugteil erfasst:
- Querversatzbewegungen,
- Höhenversatzbewegungen,
- Auffahrbewegungen.

Erfindungsgemäß wurde erkannt, dass Trackingsysteme, wie sie aus anderen technischen Bereichen bekannt sind, z. B. um die Position und/oder Orientierung von Objekten oder Personen zu ermitteln, auch im Fahrzeugbereich eingesetzt werden können, um Relativbewegungen zwischen beweglich miteinander verbundenen Fahrzeugteilen eines Fahrzeugverbunds zu erfassen. Erfindungsgemäß wird daher ein an sich bekanntes Trackingsystem eingesetzt, welches ein erstes Trackingmodul und ein zweites Trackingmodul aufweist, deren Position und/oder Orientierung relativ zueinander mittels einer Sensoreinrichtung des Trackingsystems ermittelbar sind/ist.

Insbesondere ist die Sensoreinrichtung so ausgelegt, dass die Anordnung der beiden Trackingmodule relativ zueinander im Raum in Bezug auf alle Bewegungsfreiheitsgrade der beiden Fahrzeugteile relativ zueinander ermittelt werden kann.

Das erste Trackingmodul ist erfindungsgemäß mit dem ersten Fahrzeugteil verbunden, während das zweite Trackingmodul mit dem zweiten Fahrzeugteil verbunden ist. Die Trackingmodule können dabei jeweils mittelbar oder unmittelbar mit dem jeweils zugeordneten Fahrzeugteil verbunden sein. Z. B. können die Trackingmodule im Boden- oder Deckenbereich des jeweiligen Fahrzeugteils angeordnet sein. Wenn das Trackingsystem auch im laufenden Betrieb eingesetzt werden soll, sind die Trackingmodule und die Sensoreinrichtung vorzugsweise für Passagiere unzugänglich oder zumindest nicht sichtbar angeordnet.

Indem das erste Trackingmodul mit dem ersten Fahrzeugteil und das zweite Trackingmodul mit dem zweiten Fahrzeugteil verbunden ist, kann anhand der ermittelten Position und/oder Orientierung der Trackingmodule relativ zueinander auf die Position und/oder Orientierung der beiden Fahrzeugteile relativ zueinander geschlossen werden. Daraus kann wiederum auf die auftretenden Relativbewegungen zwischen den beiden Fahrzeugteilen geschlossen werden. Letztlich ist es mit einem solchen Trackingsystem somit möglich, die im laufenden Betrieb auftretenden Relativbewegungen zwischen den beiden Fahrzeugteilen zu ermitteln.

Um die Position und/oder Orientierung zwischen den beiden Trackingmodulen zu ermitteln, gibt es verschiedene Möglichkeiten. Z. B. können hierzu eine oder mehrere Abstands- und/oder Winkelinformationen zwischen den beiden Trackingmodulen erfasst werden. Auch kann die Position und/oder Orientierung auf Basis eines Musters bestimmt werden, welches sich auf dem einen Trackingmodul befindet und von dem anderen Trackingmodul aus mit der Sensoreinrichtung ein Bild aufgenommen wird. Z. B. kann eine Änderung der Position und/oder Orientierung sich in dem Bild als eine Verzerrung und/oder Größenänderung darstellen.

Bei einer vorgegebenen Zahl an möglichen Bewegungsfreiheitsgraden für die Relativbewegung der beiden Fahrzeugteile reichen eine dieser Zahl entsprechende Zahl an unabhängigen Messgrößen aus, um die Orientierung und Position der beiden Trackingmodule und somit der beiden Fahrzeugteile vollständig zu beschreiben. Bei sechs möglichen Freiheitsgraden, wie diese üblicherweise bei zwei miteinander verbundenen Schienenfahrzeugteilen vorhanden sind, werden also sechs voneinander unabhängige Messgrößen benötigt. Die Sensoreinrichtung ist dabei so eingerichtet, dass mit ihr die Messgrößen erfasst werden können, wie es für den jeweiligen Anwendungsfall erforderlich ist. Die Messung kann dabei auf optischem Weg erfolgen. Daneben gibt es aber auch diverse andere Möglichkeiten.

Gemäß einem Ausführungsbeispiel weist die Sensoreinrichtung mindestens einen Seilzugsensor auf, mit dem eine Abstandsinformation zwischen den Trackingmodulen gemessen wird. Die Abstandsinformation kann dabei einen absoluten Abstand und/oder eine Abstandsänderung umfassen. Konkret ist der Seilzugsensor an dem ersten Trackingmodul an einem ersten Anlenkungspunkt und an dem zweiten Trackingmodul an einem zweiten Anlenkungspunkt angebunden. So kann mit dem Seilzugsensor z. B. eine Abstandsänderung zwischen den beiden Anlenkungspunkten ermittelt werden. Die Abstandsänderung bezieht sich dabei insbesondere auf einen vorbekannten Abstand der beiden Trackingmodule relativ zueinander, der vorliegt, wenn sich die beiden Fahrzeugteile und somit auch die beiden Trackingmodule in einer vorgegebenen Referenzposition zueinander befinden. Anhand des vorbekannten Abstands und der Abstandsänderung kann auf den aktuellen absoluten Abstand geschlossen werden.

Wenn Relativbewegungen mit mehr Bewegungsfreiheitsgraden erfasst werden sollen, müssen weitere, unabhängige Messgrößen mit der Sensoreinrichtung ermittelt werden. Gemäß einem Ausführungsbeispiel umfasst die Sensoreinrichtung dazu insgesamt sechs Seilzugsensoren, wobei mit den Seilzugsensoren sechs voneinander unabhängige Abstände bzw. Abstandsänderungen erfasst werden, so dass insgesamt eine Relativbewegung der beiden Trackingmodule mit sechs Freiheitsgraden ermittelt werden kann. Die Anordnung der Trackingmodule und Seilzugsensoren kann dabei ähnlich wie bei einem Hexapod gestaltet sein. D. h., es sind drei Anlenkungspunkte an dem ersten Trackingmodul und drei Anlenkungspunkte an dem zweiten Trackingmodul vorgesehen, wobei sich von jedem Anlenkungspunkt an dem ersten bzw. zweitem Trackingmodul zwei Seilzugsensoren in Richtung des jeweils anderen Trackingsmoduls erstrecken, dort aber an voneinander verschiedenen Anlenkungspunkten angelenkt sind, so dass voneinander unabhängige Abstandsänderungen erfasst werden.

Die Verwendung von Seilzugsensoren ist eine Möglichkeit, um die Position und/oder Orientierung der Trackingmodule relativ zueinander zu erfassen und so auf die Relativbewegung der Fahrzeugteile zu schließen. Eine weitere Möglichkeit ist, dass die Sensoreinrichtung mindestens einen optischen Sensor umfasst, mit dem eine Änderung der Position und/oder Orientierung zwischen den beiden Trackingmodulen ermittelt werden kann. Dazu kann vorgesehen sein, dass der optische Sensor an dem ersten Trackingmodul angeordnet ist, wobei an dem zweiten Trackingmodul ein Bezugsobjekt angeordnet ist und mit dem optischen Sensor z. B. der Abstand zu diesem Bezugsobjekt ermittelt wird.

Bei dem optischen Sensor kann es sich insbesondere um eine Kamera handeln, mit der das Bezugsobjekt bildlich erfasst wird. Dabei kann anhand des aufgenommenen Bildes des Bezugsobjekts auf die Position und/oder Orientierung der beiden Trackingmodule relativ zueinander geschlossen werden. Dazu kann z. B. eine Position des Bezugsobjekts in dem aufgenommenen Bild ermittelt werden. Durch einen Vergleich mit einem zuvor aufgenommenen Referenzbild kann nachvollzogen werden, wie sich die Position und/oder Orientierung geändert hat. Auch können bei der Bildauswertung vorgegebene Messgrößen, wie der Abstand von zwei zueinander beabstandet angeordneten Bezugsobjekten oder den geometrischen Abmessungen eines Bezugsobjekts, ausgewertet werden, um so auf Änderungen der Position und/oder Orientierung der beiden Trackingmodule zueinander zu schließen.

Anstelle eines kamerabasierten Sensors können auch andere optische Sensoren zum Einsatz kommen. Beispielsweise kann ein laserbasierter Sensor zur Messung eines Abstands zwischen dem Sensor und dem Bezugsobjekt verwendet werden.

Bei dem Bezugsobjekt kann es sich um eine vorgegebene Markierung auf dem zweiten Trackingmodul oder eine prägnante Geometrie an dem zweiten Trackingmodul handeln. Insbesondere kann es sich bei dem Bezugsobjekt um einen selbstleuchtenden oder reflektierenden Marker handeln, wodurch das Bezugsobjekt auch bei ungünstigen Lichtverhältnissen sicher erkannt und somit eine Änderung der Position und/oder Orientierung sicher ermittelt werden kann. Insbesondere können mehrere Bezugsobjekte in Form von Markern an einem der beiden Trackingmodule angeordnet sein. Z. B. kann ein Bezugsobjekt als eine Art Koordinatensystem ausgebildet sein, wobei an jedem Ende des Koordinatensystems ein Marker angeordnet ist. Im Rahmen einer Bildauswertung können die Positionen der Marker und schließlich die Abstände zwischen den Markern bestimmt werden, woraus wiederum auf die Position und/oder Orientierung der beiden Trackingmodule zueinander geschlossen werden kann.

Gemäß einer Ausführungsform sind an einem der beiden Trackingmodule zwei optische Sensoren voneinander beabstandet angeordnet, während an dem anderen Trackingmodul ein oder auch mehrere Bezugsobjekte angeordnet sind. Mit den beiden optischen Sensoren werden z. B. Bilder der Bezugsobjekte erfasst. Zur Auswertung, ob und wie sich die Position und/oder Orientierung der beiden Trackingmodule zueinander geändert hat, wird zunächst in einer Referenzposition der beiden Fahrzeugteile und somit auch der beiden Trackingmodule zueinander ein Referenzbild aufgenommen. Mit den beiden optischen Sensoren an dem einen Trackingmodul werden dann kontinuierlich oder in vorgegebenen Zeitabständen Bilder von den Bezugsobjekten an dem anderen Trackingmodul aufgenommen. Durch den Vergleich des jeweils aktuellen Bilds mit einem Referenzbild kann auf Änderungen der Position und/oder Orientierung der beiden Trackingmodule zueinander geschlossen werden. Um Informationen zu einer Dynamik der jeweils auftretenden Änderungen in der Position und/oder Orientierung zu erhalten, können auch jeweils aufeinanderfolgend aufgenommene Bilder miteinander verglichen werden.

Die Sensoreinrichtung kann gemäß einer Ausführungsform so ausgebildet sein, dass sich mit ihr die folgenden Messgrößen bestimmen lassen: eine Beschleunigung, eine Winkelgeschwindigkeit und/oder ein Magnetfeld bzw. eine Änderung der entsprechenden Messgrößen. Die entsprechenden Messgrößen werden dabei insbesondere in allen drei Raumrichtungen erfasst. Zum Erfassen der o. g. Messgrößen kann die Sensoreinrichtung einen oder mehrere der folgenden Sensoren umfassen: einen Beschleunigungssensor, einen Winkelgeschwindigkeitssensor und/oder einen Magnetfeldsensor. Vorzugsweise ist für jedes Trackingmodul eine entsprechende Gruppe von Sensoren vorgesehen, die insbesondere als ein Sensorbaustein zu einer Baueinheit zusammengefasst sind. Dabei sind insbesondere IMUs (Inertial Measurement Units) oder auch MARG-Sensoren (Magnetic, Angular Rate, Gravity) zu nennen. Jedes Trackingmodul kann auch mehrere solcher Sensorbausteine umfassen. Durch die Verwendung solcher Sensorbausteine lässt sich das Trackingsystem besonders kostengünstig und/oder mit besonders geringem Bauraumbedarf realisieren. Es ist somit ohne großen Aufwand und/oder ohne große Einschränkungen ein serienmäßiger Einbau eines solchen Trackingsystems in einem Fahrzeugverbund möglich, so dass sich jederzeit im laufenden Betrieb des Fahrzeugverbunds die Relativbewegungen zwischen den Fahrzeugteilen des Fahrzeugverbunds ermitteln lassen.

Wenn beispielsweise für jedes Trackingmodul alle der o. g. Messgrößen in allen drei Raumrichtungen erfasst werden, erhält man insgesamt neun Messwerte, die gleichzeitig oder zumindest nahezu gleichzeitig für jedes Trackingmodul erfasst werden. Vorzugsweise werden die entsprechenden Messwerte für die beiden Trackingmodule synchron oder im Wesentlichen synchron aufgezeichnet. Aus den erfassten Messwerten zu den verschiedenen Messgrößen kann auf die Position und/oder Orientierung des jeweiligen Trackingmoduls geschlossen werden. Aus dem Vergleich der Position und/oder Orientierung der jeweiligen Trackingmodule kann schließlich eine Relativbewegung zwischen den beiden miteinander verbundenen Fahrzeugteilen ermittelt werden. Insbesondere werden die Messwerte der einzelnen Sensoren dazu gemäß dem Sensor-Fusion-Prinzip so miteinander kombiniert, dass sich die Nachteile, wie bspw. Sensordrift und Rauschen, für die einzelnen Messgrößen gegenseitig kompensieren. Dafür können u.a. folgende Algorithmen verwendet werden: Kalman Filter, Extended Kalman Filter, Complementary Filter oder Madgwick Filter.

Zur Verbesserung der Genauigkeit der Messung kann die Sensoreinrichtung mindestens ein GNSS-Sensor aufweisen. Insbesondere kann für jedes Trackingmodul ein solcher GNSS-Sensor vorgesehen sein. Z. B. kann der GNSS-Sensor auch dafür verwendet werden, um die jeweiligen Messgrößen der Trackingmodule synchron unter Verwendung der Zeitinformationen des GNSS-Signals aufzuzeichnen. Alternativ oder zusätzlich kann dafür auch ein externes Referenzsignal verwendet werden. Dieses kann bspw. ein Spannungspuls sein, der von allen Trackingmodulen erfasst wird. Der Spannungspuls wird dabei periodisch erzeugt und über ein Kabel oder drahtlos übertragen.

Um die Zuverlässigkeit der erfassten Messwerte auch über einen längeren Zeitraum gewährleisten zu können, kann es erforderlich sein, die Sensoreinrichtung bzw. die Sensoren in regelmäßigen oder unregelmäßigen Abständen in einer Nulllage zueinander zu kalibrieren. Dazu kann in weiterer Ausgestaltung eine Kalibrierungseinheit zum automatischen Kalibrieren des Beschleunigungssensors, des Winkelgeschwindigkeitssensors und/oder des Magnetfeldsensors vorgesehen sein. Die Kalibrierungseinheit weist dabei eine Eingangsschnittstelle zum Empfang der Daten des GNSS-Sensors und/oder eines externen Referenzsignals auf, wobei der Beschleunigungssensor, der Winkelgeschwindigkeitssensor und/oder der Magnetfeldsensor auf Basis der Daten des GNSS-Sensors und/oder des externen Referenzsignals kalibriert werden. Das externe Referenzsignal kann beispielsweise von einem mechanischen, magnetischen oder optischen Schalter stammen. Dafür kann ein solcher mechanischer Schalter beispielsweise so ausgeführt sein, dass dieser in der Nulllage geschlossen ist und ein Referenzsignal zur Kalibrierungseinheit gesendet wird. Dieses kann entweder drahtlos oder durch ein Kabel übertragen werden.

Die einzelnen Sensoren können so ausgelegt sein, dass die Datenkommunikation und/oder -auswertung über entsprechende Mittel zur Datenkommunikation und/oder -auswertung des Fahrzeugverbunds erfolgt. Die Sensoren können jedoch auch über eine eigene Datenkommunikation und/oder -auswertung verfügen, so dass die Sensoreinrichtung separat von dem Fahrzeugverbund betreibbar ist.Aus den Informationen zur Position und/oder Orientierung der beiden Trackingmodule zueinander kann darauf geschlossen werden, welche Relativbewegungen zwischen den beiden Fahrzeugteilen im Betrieb auftreten. Insbesondere können die auftretenden Relativbewegungen eine oder mehrere der folgenden Bewegungen umfassen: Knick- oder Schwenkbewegungen, d. h. Drehbewegungen um eine zwischen den Fahrzeugteilen liegende vertikale Achse; Wankbewegungen, d. h. Drehbewegungen um eine Fahrzeuglängsachse; Nickbewegungen, d. h. Drehbewegungen um eine quer zu der Fahrzeuglängsachse verlaufenden horizontalen Achse; Querversatzbewegungen, d. h. translatorische Bewegungen in Richtung der quer zur Fahrzeuglängsachse verlaufenden horizontalen Achse; Höhenversatzbewegungen, d. h. translatorische Bewegungen in Richtung der zwischen den Fahrzeugteilen liegenden vertikalen Achse; Auffahrbewegungen, d. h. translatorische Bewegungen in Richtung der Fahrzeuglängsachse.

Die Relativbewegungen können in Bezug auf verschiedene Referenzpunkte angegeben werden. Z. B. können die mittels des Trackingsystems erfassten Messgrößen so ausgewertet werden, dass letztlich eine Relativbewegung zwischen einer Stirnwand eines Fahrzeugteils gegenüber der gegenüberliegenden Stirnwand des anderen Fahrzeugteils angegeben wird. Es ist auch möglich, dass die Bewegung der Stirnwände bezogen auf einen Kupplungs- und/oder Gelenkpunkt angegeben wird, der im Bereich einer Kupplung oder eines Gelenks liegt, durch die/das die Fahrzeugteile miteinander verbunden sind. Dies ist insbesondere dann ohne Weiteres möglich, wenn bekannt ist, wo sich die jeweiligen Trackingmodule in einer Referenzposition in Bezug auf den gewünschten Referenzpunkt befinden, z. B. in Bezug auf die Stirnwände der Fahrzeugteile.

Gemäß einer Ausführungsform der Erfindung ist eine Auswerteeinrichtung vorgesehen, mit der die erfassten Relativbewegungen klassiert werden können. Dabei erfolgt eine Klassierung gemäß vorgegebenen Standardbewegungen, bei den es sich insbesondere um die zuvor genannten Relativbewegungen wie Knicken, Wanken, Nicken, Quer- bzw. Höhenversatz und Auffahrbewegungen handeln kann. Z. B. kann ausgewertet werden, aus welchen Bewegungsanteilen sich eine erfasste Relativbewegung zusammensetzt und es erfolgt eine entsprechende Klassierung. Anhand einer solchen Auswertung kann z. B. darauf geschlossen werden, in welchem Umfang ein zwischen den Fahrzeugteilen angeordnetes Übergangssystem in Hinblick auf die verschiedenen Standardbewegungen hin beansprucht wird. Dazu kann beispielsweise ausgewertet werden, wie oft und in welchem Umfang die jeweiligen Standardbewegungen auftreten. Z. b. kann betrachtet werden, wie oft und mit welchen Ausschlägen Knickbewegungen auftreten. Zusätzlich kann betrachtet werden, welche weiteren Bewegungen zusammen mit einer Knickbewegung auftreten. Aus diesen Informationen können z. B. Testszenarien abgeleitet werden für ein Übergangssystem. Auch kann auf dieser Basis eine Abschätzung erfolgen, wann z. B. eine Wartung des Übergangssystems im Betrieb erforderlich sein wird. Insbesondere bei einer laufenden Erfassung der Relativbewegungen im Betrieb ist somit eine vorausschauende und bedarfsabhängige Planung von Instandhaltungsmaßnahmen möglich.

Die zwischen den Fahrzeugteilen auftretenden Relativbewegungen hängen insbesondere von einem Streckenprofil ab, entlang dem sich der Fahrzeugverbund bewegt. Entsprechend kann auf Basis der auftretenden Relativbewegungen auch auf das Streckenprofil geschlossen werden. Dazu kann eine entsprechende Auswerteeinrichtung vorgesehen sein, mit der auf Basis der erfassten Relativbewegungen Daten zu einem Verlauf eines Streckenprofils ermittelt werden können. Ergänzend kann auch ein GPS- bzw. GNSS-Sensor o. ä. vorgesehen sein, über den parallel der Streckenverlauf erfasst wird. Anhand der auftretenden Relativbewegungen kann insbesondere auf Besonderheiten in dem Streckenprofil geschlossen werden, z. B. auf die Art und Ausprägung von Kurven. Es kann auch ein Rückschluss auf den Zustand eines Streckenprofils möglich sein. Z. B. kann ein sprunghaft auftretender Höhenversatz auf eine Unebenheit im Streckenprofil hinweisen, welche durch einen GPS- bzw. GNSS-Sensor ggf. nur unzureichend als solche erkannt werden kann.

Daneben können die auftretenden Relativbewegungen - insbesondere hinsichtlich ihrer Dynamik - auch durch Fahrzeugeigenschaften beeinflusst sein. Entsprechend kann eine erfindungsgemäß vorgesehene Auswerteeinrichtung auch dazu genutzt werden, um auf Basis der erfassten Relativbewegungen auf einen Zustand des Fahrzeugverbunds zu schließen.

Ferner betrifft die Erfindung ein Verfahren zum Ermitteln von Relativbewegungen eines ersten Fahrzeugteils eines Fahrzeugverbunds gegenüber einem damit beweglich verbundenen zweiten Fahrzeugteil des Fahrzeugverbunds. Die Relativbewegungen werden erfindungsgemäß mit einem Trackingsystem ermittelt. Dazu wird ein erstes Trackingmodul des Trackingsystems an dem ersten Fahrzeugteil angeordnet und es wird ein zweites Trackingmodul des Trackingsystems an dem zweiten Fahrzeugteil angeordnet. Mit einer Sensoreinrichtung des Trackingsystems wird vorzugsweise kontinuierlich oder quasi-kontinuierlich eine Position und/oder Orientierung der beiden Trackingmodule relativ zueinander ermittelt. Auf dieser Basis kann auf die auftretenden Relativbewegungen geschlossen werden.

Insbesondere kann bei dem erfindungsgemäßen Verfahren vorgesehen sein, dass im Rahmen einer Kalibrierung eine Position und/oder Orientierung der beiden Trackingmodule in einer vorgegebenen Referenzposition der beiden Fahrzeugteile relativ zueinander ermittelt wird. Anhand der vorbekannten Position und/oder Orientierung in der Referenzposition kann dann auf die jeweils aktuell vorliegende Position und/oder Orientierung der beiden Fahrzeugteile zueinander bezogen auf die Referenzposition geschlossen werden.

Um die Position und/oder Orientierung der beiden Trackingmodule relativ zueinander zu ermitteln, kann z. B. mindestens eine Abstandsinformation zwischen einem ersten Anlenkungspunkt an dem ersten Trackingmodul und einem zweiten Anlenkungspunkt an dem zweiten Trackingmodul mit einem Seilzugsensor erfasst werden. Insbesondere können Abstandsinformationen zwischen voneinander verschiedenen Anlenkungspunkten an dem ersten Trackingmodul und dem zweiten Trackingmodul erfasst werden, wozu weitere Seilzugsensoren vorgesehen sein können. Die Zahl an voneinander unabhängigen Messgrößen bestimmt sich dabei insbesondere nach der Zahl an Bewegungsfreiheitsgraden zwischen den beiden Fahrzeugteilen, um deren jeweils vorliegende Relativposition und somit die auftretenden Relativbewegungen zwischen den Fahrzeugteilen vollständig beschreiben zu können.

Alternativ oder zusätzlich kann mindestens ein Bezugsobjekt, das an dem ersten oder zweiten Trackingmodul angeordnet ist, mit mindestens einem optischen Sensor und vorzugsweise mit mindestens zwei optischen Sensoren, der/die an dem jeweils anderen Trackingmodul angeordnet ist/sind, bildlich erfasst werden. Aus dem erfassten Bild bzw. den erfassten Bildern kann eine Position und/oder Orientierung der beiden Trackingmodule relativ zueinander ermittelt werden. Auf dieser Basis kann wiederum eine Relativbewegung zwischen den beiden Fahrzeugteilen ermittelt werden.

Die erfassten Relativbewegungen können bei dem erfindungsgemäßen Verfahren weiter ausgewertet werden. Beispielsweise können die Relativbewegungen gemäß vorgegebenen Standardbewegungen klassiert werden. Als Standardbewegungen kommen insbesondere eine oder mehrere der folgenden Relativbewegungen in Frage: Knick- oder Schwenkbewegungen, Wankbewegungen, Nickbewegungen, Quer- und Höhenversatzbewegungen, und Auffahrbewegungen. Eine weitere Möglichkeit ist, dass auf Basis der erfassten Relativbewegungen Daten zu einem Streckenprofil ermittelt werden, entlang dem sich der Fahrzeugverbund bewegt.

In Bezug auf weitere Ausführungsformen des erfindungsgemäßen Verfahrens gelten die Ausführungen zu der erfindungsgemäßen Verwendung des Trackingsystems entsprechend.

Ferner betrifft die Erfindung einen Fahrzeugverbund mit einem ersten Fahrzeugteil und einem zweiten Fahrzeugteil, wobei die beiden Fahrzeugteile beweglich miteinander verbunden sind. Der Fahrzeugverbund ist dabei mit einem Trackingsystem ausgestattet, mit dem sich Relativbewegungen des ersten Fahrzeugteils gegenüber dem zweiten Fahrzeugteil ermitteln lassen. Dazu umfasst das Trackingsystem ein erstes Trackingmodul, welches (mittelbar oder unmittelbar) mit dem ersten Fahrzeugteil verbunden ist, und ein zweites Trackingmodul, welches (mittelbar oder unmittelbar) mit dem zweiten Fahrzeugteil verbunden ist, sowie eine Sensoreinrichtung, mit der eine Position und/oder Orientierung der beiden Trackingmodule relativ zueinander ermittelt werden kann.

In Bezug auf weitere Ausführungsformen des erfindungsgemäßen Fahrzeugverbunds gelten die Ausführungen zu der erfindungsgemäßen Verwendung des Trackingsystems und dem erfindungsgemäßen Verfahren entsprechend.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einer Sensoreinrichtung die Rede ist, so ist dies so zu verstehen, dass genau eine Sensoreinrichtung, zwei Sensoreinrichtungen oder mehrere Sensoreinrichtungen vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: einen Übergang zwischen zwei Fahrzeugteilen mit einem Trackingsystem gemäß einer ersten Ausführungsform,
- Figur 2: einen Ausschnitt des Trackingsystems gemäß Figur 1,
- Figur 3: einen Übergang zwischen zwei Fahrzeugteilen mit einem Trackingsystem gemäß einer zweiten Ausführungsform,
- Figur 4: ein zeichnerisches Modell zum Ermitteln der Position und/oder Orientierung von zwei Fahrzeugteilen mittels eines Trackingsystems.

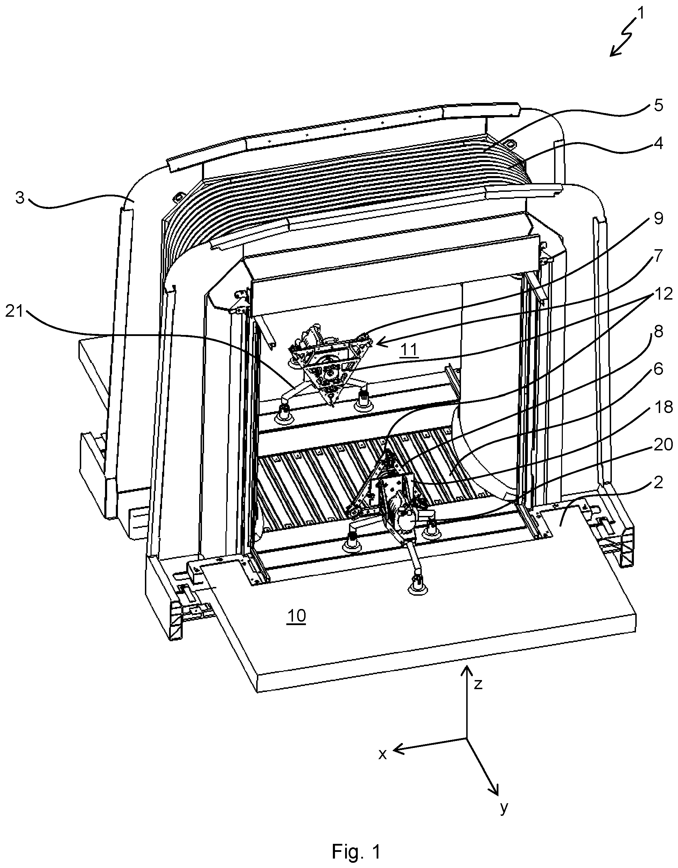

Figur 1 zeigt schematisch einen Übergang 1 zwischen einem ersten Fahrzeugteil 2 und einem zweiten Fahrzeugteil 3, die beweglich miteinander verbunden sind. Bei dem dargestellten Ausführungsbeispiel handelt es sich um einen Fahrzeugverbund in Form eines Schienenfahrzeugs, bei dem die Fahrzeugteile 2 und 3 z. B. durch eine Kupplung miteinander verbunden sind. Die Fahrzeugteile 2 und 3 sind in Figur 1 jeweils nur mit ihren jeweils gegenüberliegenden Endabschnitten dargestellt. Zwischen den beiden Fahrzeugteilen 2 und 3 ist ein Übergangssystem 4 mit einem Balg 5 und einer im Bodenbereich angeordneten Übergangsplattform 6 angeordnet, um so Passagieren einen geschützten Wechsel von einem Fahrzeugteil 2 zum anderen Fahrzeugteil 3 und umgekehrt zu ermöglichen.

Die Fahrzeugteile 2 und 3 sind derart miteinander verbunden, dass diverse Relativbewegungen zwischen den beiden Fahrzeugteilen 2 und 3 möglich sind. Insbesondere gehören hierzu - je nach Art der beweglichen Verbindung - eine oder mehrere der folgenden Relativbewegungen:
- Knick- oder Schwenkbewegungen, d. h. Drehbewegungen um eine zwischen den Fahrzeugteilen 2, 3 verlaufende vertikale Achse, die parallel zu der in Figur 1 mit z bezeichneten Achse verläuft,
- Wankbewegungen, d. h. Drehbewegungen um eine zwischen den Fahrzeugteilen 2, 3 verlaufende horizontale Achse, die parallel zu der in Figur 1 mit y bezeichneten Fahrzeuglängsachse verläuft,
- Nickbewegungen, d. h. Drehbewegungen um eine zwischen den Fahrzeugteilen 2, 3 verlaufende horizontale Achse, die parallel zu der in Figur 1 mit x bezeichneten und quer zur Fahrzeuglängsachse orientierten Achse verläuft,
- Querversatzbewegungen, d. h. translatorische Bewegungen entlang einer zwischen den Fahrzeugteilen 2, 3 verlaufenden horizontalen Achse, die parallel zu der in Figur 1 mit x bezeichneten und quer zur Fahrzeuglängsachse orientierten Achse verläuft,
- Höhenversatzbewegungen, d. h. translatorische Bewegungen entlang einer zwischen den Fahrzeugteilen 2, 3 verlaufenden vertikalen Achse, die parallel zu der in Figur 1 mit z bezeichneten Achse verläuft,
- Auffahrbewegungen, d. h. translatorische Bewegungen entlang einer zwischen den Fahrzeugteilen 2, 3 verlaufenden horizontalen Achse, die parallel zu der in Figur 1 mit y bezeichneten Fahrzeuglängsachse verläuft.

Konkret können bei einer Verbindung der Fahrzeugteile 2, 3 durch eine Kupplung alle der vorgenannten Relativbewegungen auftreten, während bei einer gelenkigen Verbindung z. B.in erster Linie nur Knick-/Schwankbewegungen, Wankbewegungen und Nickbewegungen möglich sind.

Für verschiedene Zwecke kann es hilfreich sein, die im Betrieb tatsächlich auftretenden bzw. zu erwartenden Relativbewegungen erfassen zu können. Z. B. können Informationen zur Art und dem Umfang der auftretenden Relativbewegungen wichtig sein für eine passende Auslegung der Verbindung zwischen den Fahrzeugteilen 2, 3 und/oder des Übergangssystems 4 und insbesondere dessen Balgs 5. Alternativ oder zusätzlich können diese Informationen dazu genutzt werden, um Rückschlüsse auf anstehende Wartungsarbeiten an dem Übergang 2 und/oder auf das Streckenprofil, entlang dem sich der Fahrzeugverbund bewegt, zu ziehen.

Erfindungsgemäß ist daher im Übergangsbereich zwischen den beiden Fahrzeugteilen 2, 3 ein Trackingsystem 7 vorgesehen, mit dem sich die Relativbewegungen zwischen den beiden Fahrzeugteilen 2, 3 erfassen lassen.

Bei dem in Figur 1 dargestellten Ausführungsbeispiel umfasst das Trackingsystem 7 zwei einander gegenüberliegend angeordnete Trackingmodule 8, 9. Das erste Trackingmodul 8 ist in etwa mittig, fest am Boden 10 des ersten Fahrzeugteils 2 angeordnet. Das zweite Trackingmodul 9 ist in etwa mittig, fest am Boden 11 des zweiten Fahrzeugteils 3 angeordnet. Bei dem in Figur 1 gezeigten Ausführungsbeispiel ist die Anordnung im Bodenbereich aufgrund des Gewichts der Trackingmodule 8, 9 bevorzugt.

Grundsätzlich können, anders als in Figur 1 dargestellt, die Trackingmodule 8, 9 beispielsweise auch an den Seitenwänden oder im Deckenbereich des jeweiligen Fahrzeugteils 2, 3 angeordnet sein. Von Bedeutung ist lediglich, dass die Position des Trackingmoduls 8, 9 relativ zu dem jeweiligen Fahrzeugteil 2, 3 bekannt ist. Vorzugsweise ist das Trackingmodul 8, 9 dazu relativ zu dem Fahrzeugteil 2, 3 ortsfest angeordnet. Grundsätzlich kann sich die Position des Trackingmoduls 8, 9 relativ zu dem jeweiligen Fahrzeugteil 2, 3 im Betrieb jedoch auch ändern, wobei dann die aktuelle Relativposition bekannt sein sollte.

Das Trackingsystem 7 umfasst eine Sensoreinrichtung 12, mit der sich die Position und/oder Orientierung der beiden Trackingmodule 8, 9 relativ zueinander ermitteln lässt. Auf Basis der so ermittelten Position und/oder Orientierung kann schließlich auf die Position und/oder Orientierung der beiden Fahrzeugteile 2, 3 und so auch die auftretenden Relativbewegungen zwischen den Fahrzeugteilen 2, 3 geschlossen werden. Insbesondere wird die Position und/oder Orientierung der beiden Trackingmodule 8, 9 relativ zueinander kontinuierlich oder quasi-kontinuierlich erfasst.

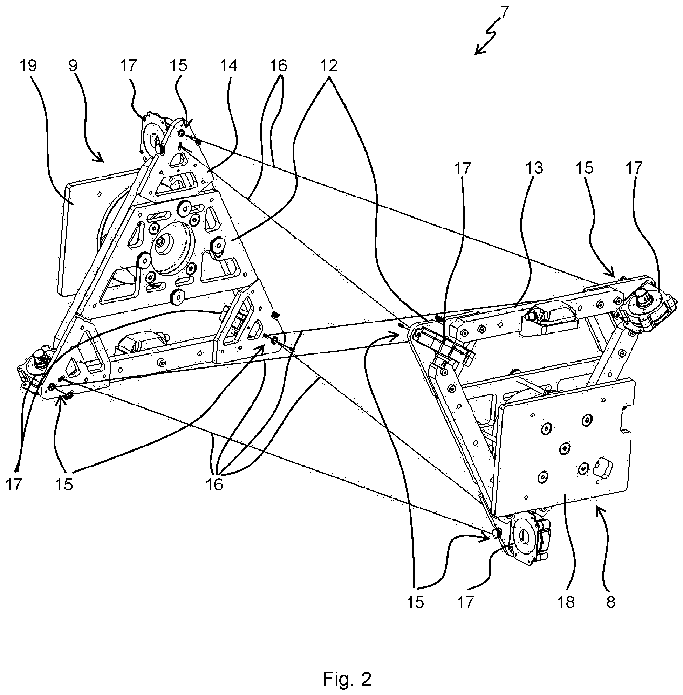

In Figur 2 ist das Trackingsystem 7 gemäß Figur 1 und insbesondere deren Sensoreinrichtung 12 im Detail dargestellt. Die Sensoreinrichtung 12 umfasst zwei dreieckige Basiskörper 13, 14, wobei ein Basiskörper 13 dem ersten Trackingmodul 8 und ein Basiskörper 14 dem zweiten Trackingmodul 9 zugeordnet ist. An den Basiskörpern 13, 14 sind jeweils in den Eckbereichen Anlenkungspunkte 15 für Seile 16 von insgesamt sechs Seilzugsensoren 17 vorgesehen. Dabei verlaufen durch jeden Anlenkungspunkt 15 jeweils zwei Seile 16, die an zwei verschiedenen Anlenkungspunkten 15 am jeweils gegenüberliegenden Basiskörper 13, 14 angelenkt sind bzw. diese durchlaufen.

Wenn sich die Trackingmodule 8, 9 relativ zueinander bewegen ändern sich die Abstände zwischen den Anlenkungspunkten 15, wobei die Abstandsänderungen mittels der sechs Seilzugsensoren 17 erfasst werden kann. Dabei werden durch die sechs Seilzugsensoren 17 insgesamt sechs voneinander unabhängige Messgrößen erfasst, so dass sich die sechs möglichen Bewegungsfreiheitsgrade (drei Drehfreiheitsgrade und drei translatorische Bewegungsfreiheitsgrade) ermitteln lassen. Wenn bei einem Fahrzeugverbund nur weniger Bewegungsfreiheitsgrade zwischen den beiden Fahrzeugteilen 2, 3 vorliegen, kann es auch ausreichend sein, eine Sensoreinrichtung 12 mit weniger voneinander unabhängigen Messgrößen einzusetzen.

Jeder Basiskörper 13, 14 ist mittels eines Montageadapter 18, 19 an einem Befestigungsgestell 20, 21 des jeweiligen Trackingmoduls 8, 9 befestigbar. Durch das Vorsehen der Montageadapter 18, 19 lässt sich die Montage des Trackingsystems 7 besonders einfach gestalten. Auch kann so eine Feinjustage der Position der Trackingmodule 8, 9 und insbesondere der Basiskörper 13, 14 relativ zueinander auf einfache Weise realisiert werden.

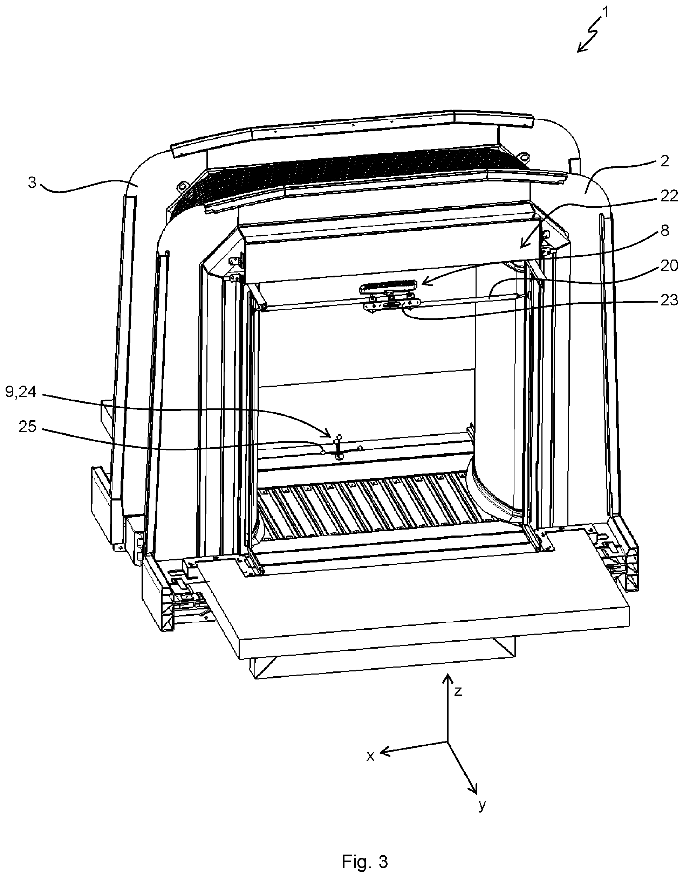

In Figur 3 ist eine weitere mögliche Ausführungsform und Anordnung eines Trackingsystems 7 für das Erfassen von Relativbewegungen zwischen den beiden beweglich miteinander verbundenen Fahrzeugteilen 2, 3 gezeigt. Das in Figur 2 dargestellte Trackingsystem 7 umfasst zwei Trackingmodule 8, 9, wobei das eine Trackingmodul 8 im Deckenbereich 22 des Fahrzeugteils 8 angeordnet ist und das andere Trackingmodul 9 am Boden 11 des Fahrzeugteils 9 montiert ist. Im Unterschied zu der Ausführungsform gemäß den Figuren 1 und 2 ist die Sensoreinrichtung 12 nicht als mechanische, sondern als optische Sensoreinrichtung ausgelegt. Durch die Verwendung einer optischen Sensoreinrichtung 12 lässt sich das Trackingsystem 7 mit besonders kleinem Bauraum und/oder geringem Gewicht realisieren, so dass sich ein solches Trackingsystem 7 besonders gut auch im Decken- und Seitenbereich des Übergangs 1 montieren lässt. Insbesondere behindert das Trackingsystem 7 einen Wechsel zwischen den Fahrzeugteilen 2, 3 bei einer solchen Anordnung nicht oder lediglich minimal, so dass das Trackingsystem 7 auch im normalen Fahrbetrieb verwendet werden kann.

Bei dem in Figur 3 dargestellten Ausführungsbeispiel umfasst das Trackingmodul 8 zwei optische Sensoren in Form von Kameras, die beabstandet zueinander an einem Montageadapter 23 des Trackingmoduls 8 angeordnet sind. Das an dem anderen Fahrzeugteil 3 montierte Trackingmodul 9 umfasst ein Bezugsobjekt 24 mit mehreren Markern 25. Das Bezugsobjekt 24 ist dabei als eine Art Koordinatensystem ausgebildet, wobei die Marker 25 jeweils an Endbereichen der verschiedenen Achsen des Koordinatensystems angeordnet sind. Die beiden Trackingmodule 8, 9 sind derart zueinander angeordnet und orientiert, dass mit den beiden Kameras des Trackingmoduls 8 die Position der Marker 25 an dem Trackingmodul 9 erfasst werden kann. Insbesondere wird das Bezugsobjekt 24 mit den beiden Kameras aus zwei verschiedenen Perspektiven erfasst. Im Rahmen einer Bildverarbeitung der von den jeweiligen Kameras aufgenommenen Bilder kann auf die Position und Orientierung der Kameras zu dem Bezugsobjekt 24 geschlossen werden. Durch eine laufende oder quasi-kontinuierliche Aufnahme von Bildern kann schließlich auf die Relativbewegungen zwischen den beiden Trackingmodulen 8, 9 und somit auch zwischen den Fahrzeugteilen 2, 3 geschlossen werden.

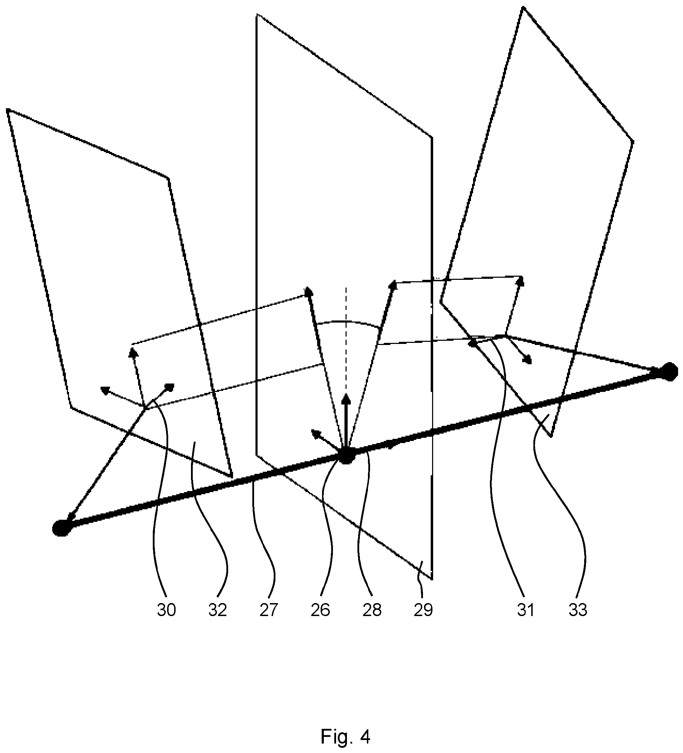

In Figur 4 ist ein zeichnerisches Modell dargestellt, welches die möglichen Freiheitsgrade zwischen den Fahrzeugteilen relativ zueinander und bezogen auf einen Verbindungspunkt 26 auf einer Verbindungslinie 27 zwischen den beiden Fahrzeugteilen visualisiert. Die Verbindungslinie 27 kann z. B. durch eine Kupplungsachse einer Kupplung vorgegeben sein, durch welche die beiden Fahrzeugteile beweglich miteinander verbunden sind, wobei der Verbindungspunkt 26 den Kupplungspunkt in etwa in der Mitte zwischen den beiden Fahrzeugteilen darstellt.

Der Verbindungspunkt 26 ist der Koordinatenursprung für ein Koordinatensystem 28 mit einer quer zu der Verbindungslinie 27 verlaufenden Ebene 29. Daneben lassen sich Koordinatensysteme 30 und 31 definieren, die ihren Ursprung z. B. am Ort der Trackingsysteme haben und durch die Ebenen 32, 33 aufgespannt werden, welche senkrecht zu Verbindungslinien zu den jeweiligen Enden der Verbindungslinie 27 orientiert sind. Diese Ebenen 32, 33 können beispielsweise mit den Stirnwänden der Fahrzeugteile übereinstimmen.

Wie in Figur 4 dargestellt, kann eine Relativposition der Ebenen 32, 33 bzw. der Stirnwände der Fahrzeugteile z. B. in Bezug auf die mittlere Ebene 29 angegeben werden. Dazu kann die jeweilige Orientierung der Koordinatenachsen der Koordinatensysteme 30, 31 auf die Ebene 29 projiziert werden bzw. in Relation zu dem Koordinatensystem 29 angegeben werden.

### Bezugszeichenliste:

- 1: Übergang
- 2: Fahrzeugteil
- 3: Fahrzeugteil
- 4: Übergangssystem
- 5: Balg
- 6: Übergangsplattform
- 7: Trackingsystem
- 8: Trackingmodul
- 9: Trackingmodul
- 10: Boden
- 11: Boden
- 12: Sensoreinrichtung
- 13: Basiskörper
- 14: Basiskörper
- 15: Anlenkungspunkt
- 16: Seil
- 17: Seilzugsensor
- 18: Montageadapter
- 19: Montageadapter
- 20: Befestigungsgestell
- 21: Befestigungsgestell
- 22: Deckenbereich
- 23: Montageadapter
- 24: Bezugsobjekt
- 25: Marker
- 26: Verbindungspunkt
- 27: Verbindungslinie
- 28: Koordinatensystem
- 29: Ebene
- 30: Koordinatensystem
- 31: Koordinatensystem
- 32: Ebene
- 33: Ebene
- x: horizontale Achse
- y: Fahrzeuglängsachse
- z: vertikale Achse

## Patentansprüche

1. Verwendung eines Trackingsystems (7), welches ein erstes Trackingmodul (8) und ein zweites Trackingmodul (9) aufweist, deren Position und/oder Orientierung relativ zueinander mittels einer Sensoreinrichtung (12) des Trackingsystems (7) ermittelbar sind/ist, zum Ermitteln von Relativbewegungen eines ersten Fahrzeugteils (2) eines Fahrzeugverbunds gegenüber einem damit beweglich verbundenen zweiten Fahrzeugteil (3) des Fahrzeugverbunds, wobei das erste Trackingmodul (8) mit dem ersten Fahrzeugteil (2) verbunden ist und das zweite Trackingmodul (9) mit dem zweiten Fahrzeugteil (3) verbunden ist
**dadurch gekennzeichnet, dass**
die Relativbewegungen des ersten Fahrzeugteils (2) gegenüber dem zweiten Fahrzeugteil (3) eine oder mehrere der folgenden Bewegungen umfassen:
- Querversatzbewegungen,
- Höhenversatzbewegungen,
- Auffahrbewegungen.

2. Verwendung nach Anspruch 1,
**dadurch gekennzeichnet, dass**
die Sensoreinrichtung (12) mindestens einen Seilzugsensor (17) umfasst, mit dem eine Abstandsinformation zwischen einem ersten Anlenkungspunkt (15) an dem ersten Trackingmodul (8) und einem zweiten Anlenkungspunkt (15) an dem zweiten Trackingmodul (9) ermittelbar ist.

3. Verwendung nach Anspruch 1 oder 2,
**dadurch gekennzeichnet, dass**
jedes Trackingmodul (8, 9) drei Anlenkungspunkte (15) aufweist und die Sensoreinrichtung (12) sechs Seilzugsensoren (17) aufweist, wobei jedem Seilzugsensor (17)
- ein Anlenkungspunkt (15) an dem ersten Trackingmodul (8), der auch einem weiteren Seilzugsensor (17) zugeordnet ist, und
- ein Anlenkungspunkt (15) an dem zweiten Trackingmodul (9), der einem anderem als dem weiteren Seilzugsensor (17) zugeordnet ist,
zugeordnet ist.

4. Verwendung nach einem der vorhergehenden Ansprüche,
**dadurch gekennzeichnet, dass**
die Sensoreinrichtung (12) mindestens einen optischen Sensor umfasst, der an dem ersten oder zweiten Trackingmodul (8, 9) angeordnet ist und mit dem ein Abstand zu einem Bezugsobjekt (24) und/oder eine Position und/oder Orientierung eines Bezugsobjekts (24) an dem jeweils anderen Trackingmodul (8, 9) ermittelbar ist, wobei der optische Sensor insbesondere eine Kamera ist, mit der das Bezugsobjekt (24) bildlich erfasst wird und/oder wobei das Bezugsobjekt (24) insbesondere einen selbstleuchtenden oder reflektierenden Marker (25) umfasst.

5. Verwendung nach einem Anspruch 4,
**dadurch gekennzeichnet, dass**
an dem ersten und/oder zweiten Trackingmodul (8, 9) mindestens zwei optische Sensoren angeordnet sind, mit denen Abstandsinformation zwischen dem jeweiligen Sensor und dem Bezugsobjekt (24) und/oder eine Position und/oder Orientierung des Bezugsobjekts (24) an dem jeweils anderen Trackingmodul (8, 9) ermittelbar sind.

6. Verwendung nach einem der vorhergehenden Ansprüche,
**dadurch gekennzeichnet, dass**
die Sensoreinrichtung (12), vorzugsweise für jedes Trackingmodul (8, 9), mindestens einen oder mehrere Sensor aus der Gruppe der folgenden Sensoren umfasst:
- einen Beschleunigungssensor,
- einen Winkelgeschwindigkeitssensor,
- einen Magnetfeldsensor,
- einen GNSS-Sensor.

7. Verwendung nach Anspruch 6,
**dadurch gekennzeichnet, dass**
das Trackingsystem (7) eine Kalibrierungseinheit zum automatischen Kalibrieren des Beschleunigungssensors, des Winkelgeschwindigkeitssensors und/oder des Magnetfeldsensors in regelmäßigen oder unregelmäßigen Zeitabständen aufweist, wobei die Kalibrierungseinheit eine Eingangsschnittstelle zum Empfang der Daten des GNSS-Sensors und/oder eines externen Referenzsignals aufweist, so dass der Beschleunigungssensor, der Winkelgeschwindigkeitssensor und/oder der Magnetfeldsensor auf Basis der Daten des GNSS-Sensors und/oder des externen Referenzsignals kalibrierbar sind.

8. Verwendung nach einem der vorhergehenden Ansprüche,
**dadurch gekennzeichnet, dass**
die Relativbewegungen des ersten Fahrzeugteils (2) gegenüber dem zweiten Fahrzeugteil (3) eine oder mehrere der folgenden Bewegungen umfassen:
- Knick- oder Schwenkbewegungen,
- Wankbewegungen,
- Nickbewegungen.

9. Verwendung nach einem der vorhergehenden Ansprüche,
**dadurch gekennzeichnet, dass**
eine Auswerteeinrichtung vorgesehen ist, mit der die erfassten Relativbewegungen gemäß vorgegebenen Standardbewegungen klassierbar sind.

10. Verwendung nach einem der vorhergehenden Ansprüche,
**dadurch gekennzeichnet, dass**
eine Auswerteeinrichtung vorgesehen ist, mit der auf Basis der erfassten Relativbewegungen Daten zu einem Streckenprofil ermittelbar sind, entlang dem sich der Fahrzeugverbund bewegt.

11. Verfahren zum Ermitteln von Relativbewegungen eines ersten Fahrzeugteils (2) eines Fahrzeugverbunds gegenüber einem damit beweglich verbundenen zweiten Fahrzeugteil (3) des Fahrzeugverbunds mit einem Trackingsystem (7) mit den Schritten:
- Anordnen eines ersten Trackingmoduls (8) des Trackingsystems (7) an dem ersten Fahrzeugteil (2),
- Anordnen eines zweiten Trackingmoduls (9) des Trackingsystems (7) an dem zweiten Fahrzeugteil (3),
- Ermitteln einer Position und/oder Orientierung der beiden Trackingmodule (8, 9) relativ zueinander mit einer Sensoreinrichtung (12) des Trackingsystems (7), wobei die Relativbewegungen des ersten Fahrzeugteils (2) gegenüber dem zweiten Fahrzeugteil (3) eine oder mehrere der folgenden Bewegungen umfassen
- Querversatzbewegungen,
- Höhenversatzbewegungen,
- Auffahrbewegungen.

12. Verfahren nach Anspruch 11,
**dadurch gekennzeichnet, dass**
zum Ermitteln der Position und/oder Orientierung der beiden Trackingmodule (8, 9) relativ zueinander mindestens eine Abstandsinformation zwischen einem ersten Anlenkungspunkt (15) an dem ersten Trackingmodul (8) und einem zweiten Anlenkungspunkt (15) an dem zweiten Trackingmodul (9) mit einem Seilzugsensor (17) erfasst wird, wobei optional weitere Abstandsinformationen zwischen weiteren Anlenkungspunkten (15) an dem ersten Trackingmodul (8) und dem zweiten Trackingmodul (9) mit weiteren Seilzugsensoren (17) erfasst werden.

13. Verfahren nach Anspruch 11 oder 12,
**dadurch gekennzeichnet, dass**
zum Ermitteln der Position und/oder Orientierung der beiden Trackingmodule (8, 9) relativ zueinander mindestens ein Bezugsobjekt (24), das an dem ersten oder zweiten Trackingmodul (8, 9) angeordnet ist, mit mindestens einem optischen Sensor, vorzugsweise mit mindestens zwei optischen Sensoren, der/die an dem jeweils anderen Trackingmodul (8, 9) angeordnet ist/sind, bildlich erfasst wird und aus dem erfassten Bild/den erfassten Bildern eine Position und/oder Orientierung der beiden Trackingmodule (8, 9) relativ zueinander erfasst wird.

14. Verfahren nach einem der Ansprüche 11 bis 13,
**dadurch gekennzeichnet, dass**
die erfassten Relativbewegungen gemäß vorgegebenen Standardbewegungen klassiert werden und/oder auf Basis der erfassten Relativbewegungen Daten zu einem Streckenprofil, entlang dem sich der Fahrzeugverbund bewegt, ermittelt werden.

15. Fahrzeugverbund mit einem ersten Fahrzeugteil (2) und einem damit beweglich verbundenen zweiten Fahrzeugteil (3),
**dadurch gekennzeichnet, dass**
der Fahrzeugverbund ein Trackingsystem (7) zum Ermitteln von Relativbewegungen des ersten Fahrzeugteils (2) gegenüber dem zweiten Fahrzeugteil (3) aufweist, wobei das Trackingsystem (7) aufweist:
- ein erstes Trackingmodul (8), das mit dem ersten Fahrzeugteil (2) verbunden ist,
- ein zweites Trackingmodul (9), das mit dem zweiten Fahrzeugteil (3) verbunden ist, und
- eine Sensoreinrichtung (12), mit der eine Position und/oder Orientierung der beiden Trackingmodule (8, 9) relativ zueinander ermittelbar sind/ist,
- wobei die Relativbewegungen des ersten Fahrzeugteils (2) gegenüber dem zweiten Fahrzeugteil (3) eine oder mehrere der folgenden Bewegungen umfassen
- Querversatzbewegungen,
- Höhenversatzbewegungen,
- Auffahrbewegungen.

## Claims

1. Use of a tracking system (7), comprising a first tracking module (8) and a second tracking module (9), the position and/or orientation of which relative to one another can be detected by means of a sensor device (12) of the tracking system (7), for detecting relative movements of a first vehicle part (2) of a combination vehicle with respect to a second vehicle part (3) of the combination vehicle, which second vehicle part is movably connected to the first vehicle part, the first tracking module (8) being connected to the first vehicle part (2), and the second tracking module (9) being connected to the second vehicle part (3),
**characterized in that**
the relative movements of the first vehicle part (2) with respect to the second vehicle part (3) comprise one or more of the following movements:
- lateral misalignment movements,
- height misalignment movements,
- bumping movements.

2. Use according to claim 1,
**characterized in that**
the sensor device (12) comprises at least one draw wire sensor (17) by means of which a piece of distance information between a first articulation point (15) on the first tracking module (8) and a second articulation point (15) on the second tracking module (9) can be detected.

3. Use according to claim 1 or claim 2,
**characterized in that**
each tracking module (8, 9) comprises three articulation points (15) and the sensor device (12) comprises six draw wire sensors (17), each draw wire sensor (17) being assigned
- an articulation point (15) on the first tracking module (8), which articulation point is also assigned to a further draw wire sensor (17), and
- an articulation point (15) on the second tracking module (9), which articulation point is assigned to a draw wire sensor other than the further draw wire sensor (17).

4. Use according to any of the preceding claims,
**characterized in that**
the sensor device (12) comprises at least one optical sensor which is arranged on the first or second tracking module (8, 9) and by means of which optical sensor a distance to a reference object (24) and/or a position and/or orientation of a reference object (24) on the other tracking module (8, 9) in each case can be detected, the optical sensor being in particular a camera, by means of which the reference object (24) is captured in image form, and/or the reference object (24) comprising in particular a self-luminous or reflective marker (25).

5. Use according to claim 4,
**characterized in that**
at least two optical sensors are arranged on the first and/or second tracking module (8, 9), by means of which sensors distance information between the relevant sensor and the reference object (24) and/or a position and/or orientation of the reference object (24) on the other tracking module (8, 9) in each case can be detected.

6. Use according to any of the preceding claims,
**characterized in that**
the sensor device (12) comprises, preferably for each tracking module (8, 9), at least one or more sensors from the group of the following sensors:
- an acceleration sensor,
- an angular velocity sensor,
- a magnetic field sensor,
- a GNSS sensor.

7. Use according to claim 6,
**characterized in that**
the tracking system (7) has a calibration unit for automatically calibrating the acceleration sensor, the angular velocity sensor and/or the magnetic field sensor at regular or irregular time intervals, the calibration unit having an input interface for receiving the data of the GNSS sensor and/or an external reference signal, so that the acceleration sensor, the angular velocity sensor and/or the magnetic field sensor can be calibrated on the basis of the data of the GNSS sensor and/or of the external reference signal.

8. Use according to any of the preceding claims,
**characterized in that**
the relative movements of the first vehicle part (2) with respect to the second vehicle part (3) comprise one or more of the following movements:
- bending or pivoting movements,
- rolling movements,
- pitching movements.

9. Use according to any of the preceding claims,
**characterized in that**
an evaluation device is provided by means of which the captured relative movements can be classified according to predefined standard movements.

10. Use according to any of the preceding claims,
**characterized in that**
an evaluation device is provided by means of which data on a route profile, along which the combination vehicle is moving, can be detected on the basis of the captured relative movements.

11. Method for detecting, by means of a tracking system (7), relative movements of a first vehicle part (2) of a combination vehicle with respect to a second vehicle part (3) of the combination vehicle, which second vehicle part is movably connected to the first vehicle part, comprising the steps of:
- arranging a first tracking module (8) of the tracking system (7) on the first vehicle part (2),
- arranging a second tracking module (9) of the tracking system (7) on the second vehicle part (3),
- detecting a position and/or orientation of the two tracking modules (8, 9) relative to one another by means of a sensor device (12) of the tracking system (7), the relative movements of the first vehicle part (2) with respect to the second vehicle part (3) comprising one or more of the following movements
- lateral misalignment movements,
- height misalignment movements,
- bumping movements.

12. Method according to claim 11,
**characterized in that**
in order to detect the position and/or orientation of the two tracking modules (8, 9) relative to one another, at least one piece of distance information between a first articulation point (15) on the first tracking module (8) and a second articulation point (15) on the second tracking module (9) is captured by means of a draw wire sensor (17), further pieces of distance information between further articulation points (15) on the first tracking module (8) and the second tracking module (9) being optionally captured by means of further draw wire sensors (17).

13. Method according to claim 11 or claim 12,
**characterized in that**
in order to detect the position and/or orientation of the two tracking modules (8, 9) relative to one another, at least one reference object (24) which is arranged on the first or second tracking module (8, 9) is captured in image form by means of at least one optical sensor, preferably by means of at least two optical sensors which is/are arranged on the relevant other tracking module (8, 9), and a position and/or orientation of the two tracking modules (8, 9) relative to one another is captured from the captured image(s).

14. Method according to any of claims 11 to 13,
**characterized in that**
the captured relative movements are classified according to predefined standard movements and/or data on a route profile, along which the combination vehicle is moving, are detected on the basis of the captured relative movements.

15. Combination vehicle comprising a first vehicle part (2) and a second vehicle part (3) movably connected thereto,
**characterized in that**
the combination vehicle has a tracking system (7) for detecting relative movements of the first vehicle part (2) with respect to the second vehicle part (3), the tracking system (7) having:
- a first tracking module (8) which is connected to the first vehicle part (2),
- a second tracking module (9) which is connected to the second vehicle part (3), and
- a sensor device (12) by means of which a position and/or orientation of the two tracking modules (8, 9) relative to one another can be detected,
- the relative movements of the first vehicle part (2) with respect to the second vehicle part (3) comprising one or more of the following movements
- lateral misalignment movements,
- height misalignment movements,
- bumping movements.

## Revendications

1. Utilisation d'un système de suivi (7) qui présente un premier module de suivi (8) et un second module de suivi (9), dont la position et/ou l'orientation l'un par rapport à l'autre peuvent être déterminées au moyen d'un dispositif à capteurs (12) du système de suivi (7), pour la détermination de mouvements relatifs d'une première partie de véhicule (2) d'un ensemble de véhicule par rapport à une seconde partie de véhicule (3) de l'ensemble de véhicule qui y est reliée de manière mobile, dans laquelle le premier module de suivi (8) est relié à la première partie de véhicule (2) et le second module de suivi (9) est relié à la seconde partie de véhicule (3)
**caractérisée en ce que**
les mouvements relatifs de la première partie de véhicule (2) par rapport à la seconde partie de véhicule (3) comprennent un ou plusieurs des mouvements suivants :
- mouvements de déplacement latéral,
- mouvements de déplacement en hauteur,
- mouvements d'approche.

2. Utilisation selon la revendication 1,
**caractérisée en ce que**
le dispositif à capteurs (12) comprend au moins un capteur de câble Bowden (17) avec lequel des informations de distance entre un premier point d'articulation (15) sur le premier module de suivi (8) et un deuxième point d'articulation (15) sur le second module de suivi (9) peuvent être déterminées.

3. Utilisation selon la revendication 1 ou 2,
**caractérisée en ce que**
chaque module de suivi (8, 9) présente trois points d'articulation (15) et le dispositif à capteurs (12) présente six capteurs de câble Bowden (17), dans laquelle chaque capteur de câble Bowden (17) est associé à
- un point d'articulation (15) sur le premier module de suivi (8) qui est également associé à un autre capteur de câble Bowden (17), et
- un point d'articulation (15) sur le second module de suivi (9) qui est associé à un capteur de câble Bowden différent de l'autre capteur de câble Bowden (17).

4. Utilisation selon l'une des revendications précédentes,
**caractérisée en ce que**
le dispositif à capteurs (12) comprend au moins un capteur optique disposé sur le premier ou le second module de suivi (8, 9) et avec lequel une distance par rapport à un objet de référence (24) et/ou une position et/ou une orientation d'un objet de référence (24) sur l'autre module de suivi (8, 9) respectif peuvent être déterminées, dans laquelle le capteur optique est en particulier une caméra avec laquelle l'objet de référence (24) est détecté par imagerie et/ou dans laquelle l'objet de référence (24) comprend en particulier un marquage autoéclairant ou réfléchissant (25).

5. Utilisation selon la revendication 4,
**caractérisée en ce que**
au moins deux capteurs optiques sont disposés sur le premier et/ou le second module de suivi (8, 9), avec lesquels des informations de distance entre le capteur respectif et l'objet de référence (24) et/ou une position et/ou une orientation de l'objet de référence (24) sur l'autre module de suivi (8, 9) respectif peuvent être déterminées.

6. Utilisation selon l'une des revendications précédentes,
**caractérisée en ce que**
le dispositif à capteurs (12), de préférence pour chaque module de suivi (8, 9), comprend au moins un ou plusieurs capteurs du groupe des capteurs suivants :
- un capteur d'accélération,
- un capteur de vitesse angulaire,
- un capteur de champ magnétique
- un capteur GNSS.

7. Utilisation selon la revendication 6,
**caractérisée en ce que**
le système de suivi (7) comprend une unité d'étalonnage pour l'étalonnage automatique du capteur d'accélération, du capteur de vitesse angulaire et/ou du capteur de champ magnétique à intervalles réguliers ou irréguliers, dans laquelle l'unité d'étalonnage présente une interface d'entrée pour la réception de données du capteur GNSS et/ou d'un signal de référence externe, de sorte que le capteur d'accélération, le capteur de vitesse angulaire et/ou le capteur de champ magnétique peuvent être étalonnés sur la base des données du capteur GNSS et/ou du signal de référence externe.

8. Procédé selon l'une des revendications précédentes,
**caractérisé en ce que**
les mouvements relatifs de la première partie de véhicule (2) par rapport à la seconde partie de véhicule (3) comprennent un ou plusieurs des mouvements suivants :
- mouvements de courbure ou d'articulationement,
- mouvements de balancement,
- mouvements de tangage.

9. Procédé selon l'une des revendications précédentes,
**caractérisé en ce que**
un dispositif d'évaluation est prévu, avec lequel les mouvements relatifs détectés peuvent être classés conformément à des mouvements standards prédéfinis.

10. Procédé selon l'une des revendications précédentes,
**caractérisé en ce que**
un dispositif d'évaluation est prévu, avec lequel des données concernant un profil de route le long duquel se déplace l'ensemble de véhicule peuvent être déterminées sur la base des mouvements relatifs détectés.

11. Procédé pour la détermination de mouvements relatifs d'une première partie de véhicule (2) d'un ensemble de véhicule par rapport à une seconde partie de véhicule (3) de l'ensemble de véhicule reliée de manière mobile à celle-ci avec un système de suivi (7), comportant les étapes consistant à :
- disposer un premier module de suivi (8) du système de suivi (7) au niveau de la première partie de véhicule (2),
- disposer un second module de suivi (9) du système de suivi (7) au niveau de la seconde partie de véhicule (3),
- déterminer une position et/ou une orientation des deux modules de suivi (8, 9) l'un par rapport à l'autre avec un dispositif à capteurs (12) du système de suivi (7), dans lequel les mouvements relatifs de la première partie de véhicule (2) par rapport à la seconde partie de véhicule (3) comprennent un ou plusieurs des mouvements suivants
- mouvements de déplacement latéral,
- mouvements de déplacement en hauteur,
- mouvements d'approche.

12. Procédé selon la revendication 11,
**caractérisé en ce que**
pour la détermination de la position et/ou de l'orientation des deux modules de suivi (8, 9) l'un par rapport à l'autre, au moins des informations de distance entre un premier point d'articulation (15) sur le premier module de suivi (8) et un deuxième point d'articulation (15) sur le second module de suivi (9) sont détectées avec un capteur de câble Bowden (17), dans lequel, éventuellement, d'autres informations de distance entre d'autres points d'articulation (15) sur le premier module de suivi (8) et le second module de suivi (9) sont détectées avec d'autres capteurs de câble Bowden (17).

13. Procédé selon la revendication 11 ou 12,
**caractérisé en ce que**
pour la détermination de la position et/ou de l'orientation des deux modules de suivi (8, 9) l'un par rapport à l'autre, au moins un objet de référence (24) disposé sur le premier ou le second module de suivi (8, 9) est détecté par imagerie avec au moins un capteur optique, de préférence avec au moins deux capteurs optiques, disposés sur l'autre module de suivi (8, 9) respectif, et une position et/ou une orientation des deux modules de suivi (8, 9) l'un par rapport à l'autre sont détectées à partir de l'image détectée/des images détectées.

14. Procédé selon l'une des revendications 11 à 13,
**caractérisé en ce que**
les mouvements relatifs détectés sont classés conformément à des mouvements standard prédéfinis et/ou des données concernant un profil de route le long duquel l'ensemble de véhicule se déplace sont déterminées sur la base des mouvements relatifs détectés.

15. Ensemble de véhicule comprenant une première partie de véhicule (2) et une seconde partie de véhicule (3) reliée de manière mobile à celle-ci,
**caractérisé en ce que**
l'ensemble de véhicule présente un système de suivi (7) pour la détermination de mouvements relatifs de la première partie de véhicule (2) par rapport à la seconde partie de véhicule (3), dans lequel le système de suivi (7) présente :
- un premier module de suivi (8) relié à la première partie de véhicule (2),
- un second module de suivi (9) relié à la seconde partie de véhicule (3), et
- un dispositif à capteurs (12) avec lequel une position et/ou une orientation des deux modules de suivi (8, 9) l'un par rapport à l'autre peuvent être déterminées,
- dans lequel les mouvements relatifs de la première partie de véhicule (2) par rapport à la seconde partie de véhicule (3) comprennent un ou plusieurs des mouvements suivants
- mouvements de déplacement latéral,
- mouvements de déplacement en hauteur,
- mouvements d'approche.
